# EUROPEAN PATENT APPLICATION

(11) **EP 0 650 114 A2**
(43) Date of publication of application: **26.04.1995**
(21) Application number: 94116831.2
(22) Date of filing: 25.10.1994
(51) Int. Cl.: G06F 3/16, G06F 3/033

(54) **Quick info windows and audio information cursors**

(30) Priority: 25.10.1993 US 146931
(71) Applicant: MICROSOFT CORPORATION, Redmond, Washington 98052-6399 (US)
(72) Inventor: Malamud, Mark A., Seattle, Washington 98103 (US); Elsbree, John E., Everett, Washington 98208 (US); Gavriluk, Erik A., Seattle, Washington 98101 (US); Barnes, David, Seattle, Washington 98115 (US)
(74) Representative: Grünecker, Kinkeldey, Stockmair & Schwanhäusser Anwaltssozietät

(57) **Abstract**

A system supports the use of audio information cursors and Quick Info Windows. The audio information cursors provide audio information about objects to which the cursors point. For instance, an audio information cursor may provide audio output specifying the name of an object to which the cursor points. Quick Info Windows are windows that are generated to provide information about objects shown on a video display. Each Quick Info Window initially includes a pointer that points to the object associated with the window. The Quick Info Window provides information such as the name of the object, the purpose of the object and how to use the object.

## Description

### Technical Field

The present invention relates generally to data processing systems and, more particularly, to display of objects on video displays in data processing systems.

### Background of the Invention

Many operating systems provide a cursor that indicates a current position on a video display. The cursor is generally manipulable by an input device, such as a keyboard or a mouse. In certain operating systems, such as the Microsoft WINDOWS, version 3.1, operating system, which is sold by Microsoft Corporation of Redmond, Washington, a window may have a status bar that displays information about the object to which the cursor is currently pointing. As the cursor is moved to point at different objects, the contents of the status bar changes accordingly. The status bar is a separate graphic entity that is not connected to the cursor and does not move with the cursor. The status bar is positioned on the video display at a fixed location within a window. As such, a user has to look at two separate portions of the screen if he wishes to view both the cursor and the status bar. This separation of the status bar from the cursor can be confusing and burdensome to the user.

### Summary of the Invention

The limitations associated with the use of a status bar are overcome by the present invention. In accordance with a first aspect of the present invention, a method is practiced in a data processing system having a video display, an output device and an input device. In this method, objects, including a cursor, are displayed on the video display. The cursor is positioned over at least a portion of one of the objects that is displayed, in response to a user using the input device. Audio information about the object that at least a portion of the cursor is over is output on the audio output device.

In accordance with another aspect of the present invention, a method is practiced in a data processing system having a video display, an audio output device and a mouse. In this method, a source object icon associated with a source object is displayed on the video display. A target object icon associated with a target object is also displayed on the video display. In response to the user using the mouse, a cursor is positioned to be over at least a portion of the source object icon. In response to the cursor being over at least a portion of the source object icon, audio information is output on the audio output device about the source object. In response to the user using the mouse, the source object icon is dragged across the video display until the cursor is over at least a portion of the target object icon. In response to the cursor being over the target object icon, audio information is output on the audio output device about the target object. This method may also include the additional step of dropping the source object icon on the target object icon in response to the user using the mouse.

In accordance with a further aspect of the present invention, objects are displayed on the video display and a cursor is positioned on the video display to be over at least a portion of one of the objects. In response to the cursor being positioned over a portion of at least one of the objects, a window holding information about the object which the cursor is over is displayed on the video display.

In accordance with an additional aspect of the present invention, an object is displayed on the video display and a context menu for the object is displayed on the video display in response to the user using the input device. The context menu includes an option for generating an information window. When the user selects the option of generating the information window, the information window is displayed on the video display. The information window holds information about the object.

In accordance with yet another aspect of the present invention, an object is displayed on the video display and the object is selected in response to the user using the input device. A window holding information about the selected object is generated in response to the user using the input device. The window includes a pointer from the window to the selected object.

In accordance with a still further aspect of the present invention, a data processing system includes a video display for displaying at least one object. The data processing system also includes an input device for positioning the cursor on the video display. The data processing system further includes an audio output device for outputting audio information and an audio information generator. The audio information generator generates audio information about an object on the video display when the cursor is positioned over the object. In addition, the audio information generator forwards the audio information to the audio output device so that the audio information may be output.

In accordance with another aspect of the invention, the data processing system includes an input device in a video display for displaying objects in windows. The data processing system also includes an information window generator for generating information windows holding information about associated objects. Each information window includes a visual pointer that points to its associated object.

### Brief Description of the Drawings

Figure 1 is a block diagram of a data processing system for practicing a preferred embodiment of the present invention.

Figures 2A, 2B and 2C each contain a diagram showing an example of a name cursor generated in accordance with the preferred embodiment of the present invention.

Figure 3 is a flow chart showing the steps performed to implement the information cursors of the preferred embodiment of present invention.

Figure 4 is a flow chart illustrating in more detail how information about an object is output in an information cursor generated in accordance with the preferred embodiment of the present invention.

Figure 5 is diagram showing an example quick information window generated in accordance with the preferred embodiment of the present invention.

Figure 6 is a flow chart showing the steps performed to access a Quick Info Window in accordance with the preferred embodiment of the present invention without entering lift mode.

Figure 7 is a flow chart illustrating the steps performed to access a Quick Info Window in riffing mode in the preferred embodiment of the present invention.

Figure 8 is a flow chart showing the steps performed to close a Quick Info Window in the preferred embodiment of the present invention.

Figure 9 is a flow chart illustrating the steps performed to move a Quick Info Window in the preferred embodiment of the present invention.

### Detailed Description of the Invention

The preferred embodiment of the present invention provides "information cursors" which display graphical or textual information or output audio information about an object to which the cursor points. Each information cursor has two portions: a pointing portion and an information portion. The pointing portion points to a position on a video display. The information portion displays textual or graphical information and/or outputs audio information about the object to which the pointing portion points. Information cursors are made available by an operating system to applications that are run on the operating system. Information cursors are available in a number of different varieties. The preferred embodiment of the present invention also provides Quick Info Windows for objects. The Quick Info Windows provide information about an object selected by a user.

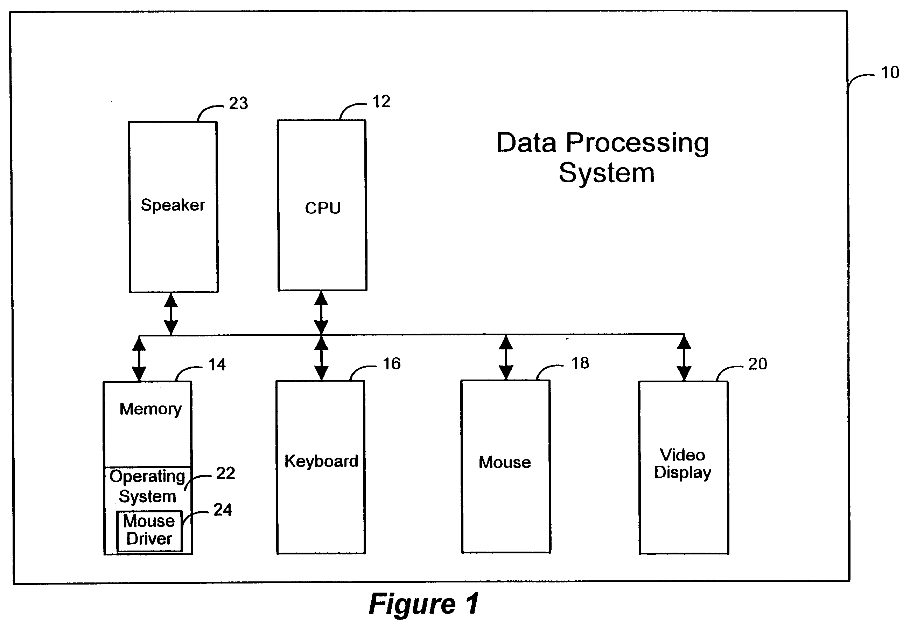

Figure 1 is a block diagram of a data processing system 10 that is suitable for practicing the preferred embodiment of the present invention. The data processing system 10 includes a central processing unit (CPU) 12 that oversees operation of the system. The data processing system 10 also includes a memory 14, a keyboard 16, a mouse 18, a video display 20 and an audio speaker 23. The memory 14 may include different types of storage, such as RAM, ROM, or disk storage. The memory 14 holds a copy of an operating system 22. A mouse driver 24 is provided within the operating system 22 to drive the mouse 18.

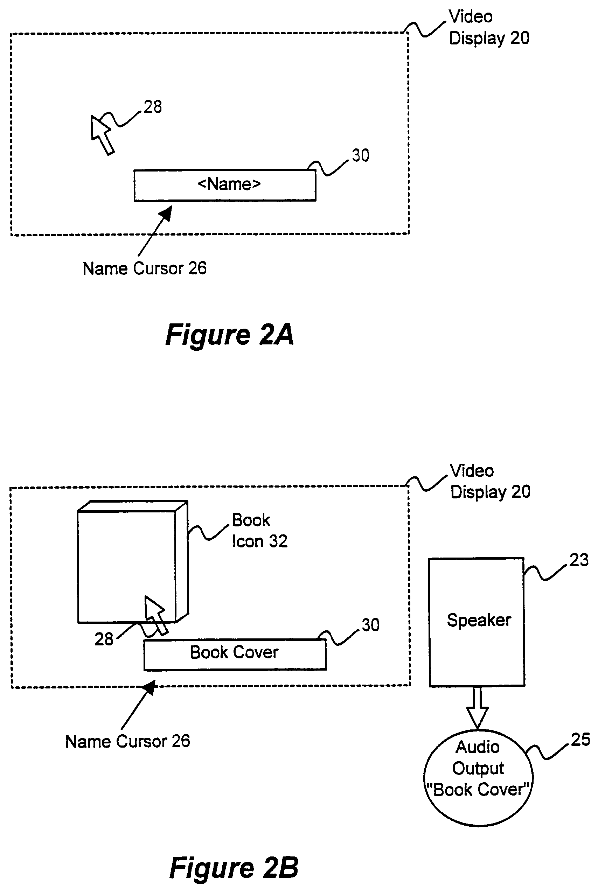

Figure 2A shows an example of one type of information cursor, a name cursor 26, displayed on the video display 20. Name cursor 26 includes a pointing portion 28 (i.e., a conventional pointing cursor) and a name box 30. The name box 30 displays the name of the object to which the pointing portion 28 points.

Figure 2B shows an example of how the name cursor 26 is used. Suppose that a book icon 32, representing a book of text stored in the system 10 (Figure 1), is displayed on the video display 20. When the pointing portion 28 of the name cursor 26 points to the book icon 32, the name box 30 of the name cursor displays the phrase "Book Cover". More generally, the name box 30 displays the name of the item to which the pointing portion 28 points. In addition, audio information may be stored for objects such that when the pointing portion 28 of the name cursor 26 points to an object, audio output specifying the name of the object is generated. Hence, audio output 25 "Book Cover" is generated by speaker 23 in the example of Figure 2B. The audio output 25 may be generated in conjunction with the visual output of the name box 30 or independently without the name box 30. The user interface may be programmed such that, when the pointing portion 28 points to nothing of significance, the name box 30 remains blank and no audio output is generated. Alternatively, the user interface may be programmed so that the name box 30 disappears in such an instance.

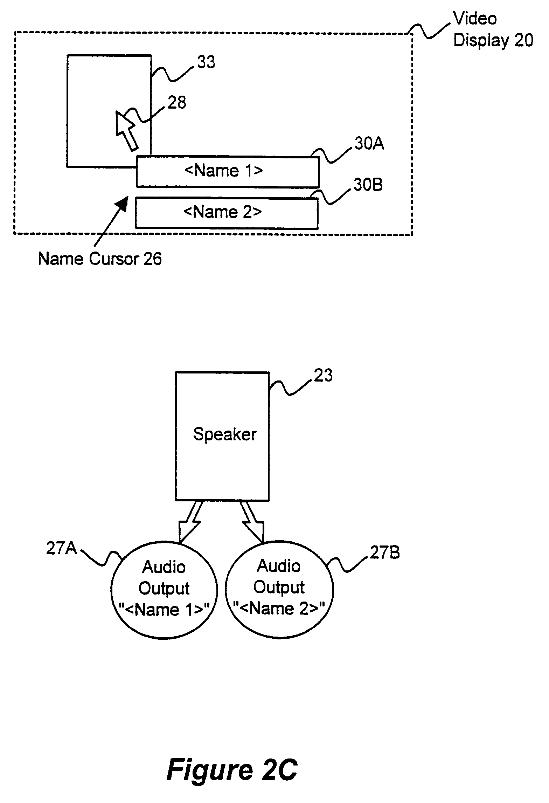

In some circumstances, the name cursor 26 may include two name boxes 30A and 30B, such as shown in Figure 2C. For instance, in an operating system that supports drag and drop operations, two names may be displayed in the name cursor 26 during a drag and drop operation. In particular, the name of the source object and the name of the target object are shown in name boxes 30A and 30B, respectively. The target object name is not shown until the pointing portion 28 of the name cursor 26 is moved to point to the target object. A source object icon 33 for the source object is dragged along with the cursor during the drag portion of the operation.

As when a single name box is displayed, audio information may be output in conjunction with the information displayed in the name boxes 30A and 30B. In fact, the audio information may be output instead of the information displayed in the name boxes 30A and 30B. In the example shown in Figure 2C, audio output 27A specifying the name of the source object is output by speaker 23 when the pointing portion 28 is first positioned over the source object icon 30. Later, during the drag operation when the pointing portion 28 is positioned over the target object icon, audio output specifying the name of the target object is output by speaker 23.

The implementation of the information cursor with the audio output in the preferred embodiment of the present invention will now be described with reference to the Microsoft WINDOWS, version 3.1, operating system. In particular, the operating system 22 is an embellished version of the Microsoft WINDOWS, version 3.1, operating system that supports the use of information cursors. The present invention is not limited to implementations with this operating system; rather, those skilled in the art will appreciate that the present invention may be implemented with other operating systems as well.

In explaining the implementation of the preferred embodiment of the present invention, it is helpful to consider the type of input device that is used. In the discussion that follows, it is assumed that the mouse 18 (Figure 1) is used as the input device for manipulating the position of the cursor on the video display 20. It should, nevertheless, be appreciated that the present invention is not limited to the use of a mouse as the input device; rather, other input devices, such as keyboard 16 or a pointing device, may alternatively be used.

The operating system 22 (Figure 1) logically divides the user interface into a number of windows. In general, each window has a separate window procedure associated with it. The operating system 22 maintains a message queue for each program that generates windows. As a program may generate multiple windows, the message queue may hold messages for multiple windows. When an event occurs, the event is translated into a message that is put into the message queue for the program. The program retrieves and delivers the message to the proper window procedure by executing a block of code known as the "message loop". The window procedure that received the message then processes the message.

When a user positions a cursor with the mouse 18 over a window or clicks the mouse by depressing one of the mouse buttons within the window, the procedure for the window receives a mouse message. The operating system 22 provides a number of predefined mouse messages. The mouse messages specify the status of mouse buttons and the position of the cursor within the window. The position of the cursor within the window is specified in (X, Y) coordinates relative to the upper left-hand cover of the window. The window procedure receives the mouse message and utilizes the information contained in the message to respond to the mouse activities. A new mouse message need not be generated for every single pixel position change of a mouse within a window; rather, a message may be generated each time the mouse moves more than a threshold number of pixels transversed by the mouse.

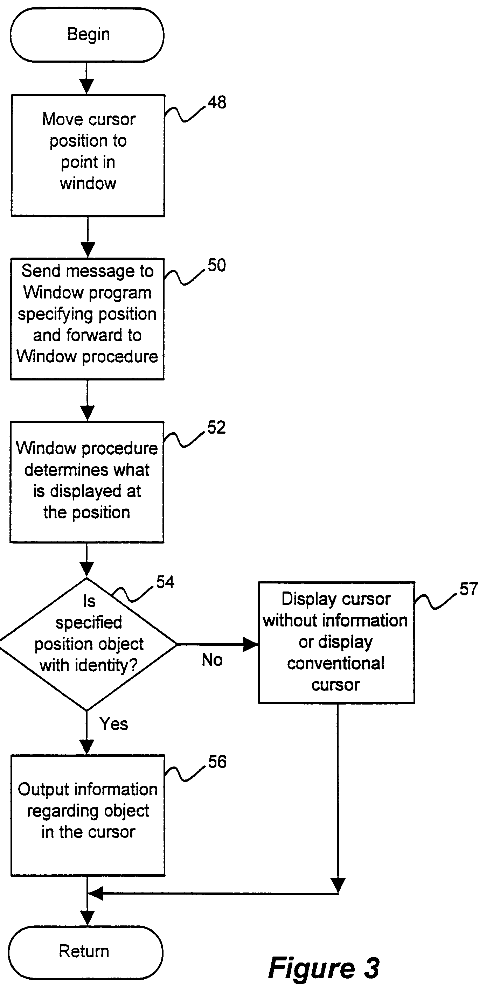

This message system plays a role in the implementation of information cursors described above. The appearance of the cursors on the video display 20 (Figure 1) is dictated by bitmaps stored within the operating system 22. The role that the message loop serves in the implementation of the information cursors can be seen in the flow chart of Figure 3, which illustrates the steps performed by the system 10 (Figure 1) when the cursor moves into a window that is displayed on the video display 20. Initially, the cursor position is moved by the mouse 18 or other input device to point within the window (step 48 in Figure 3). A message is generated and sent to the application program that is executing, which, in turn, forwards the message to the window procedure associated with the window (step 50). The message specifies the position of the cursor in the window as described above. The window procedure then determines what is displayed at the cursor position within the window (step 52). For instance, an object may be at the specified position or nothing of particular importance may be at the specified position. A determination is made whether the specified position corresponds to the position of an object with an identity (step 54). In other words, a determination is made whether a named entity is present at the specified cursor position. If a named entity is present at the specified cursor position, the information regarding the object at the specified cursor position is output (step 56). This information may be video information, audio information or both audio and video information. If, however, a named entity is not present at the specified cursor position, either a conventional cursor is displayed or the information containing portion (e.g., name box 30, preview portion 36 or property box 40) of the information cursor is shown in blank (step 57). The choice between these options is controlled by the application program.

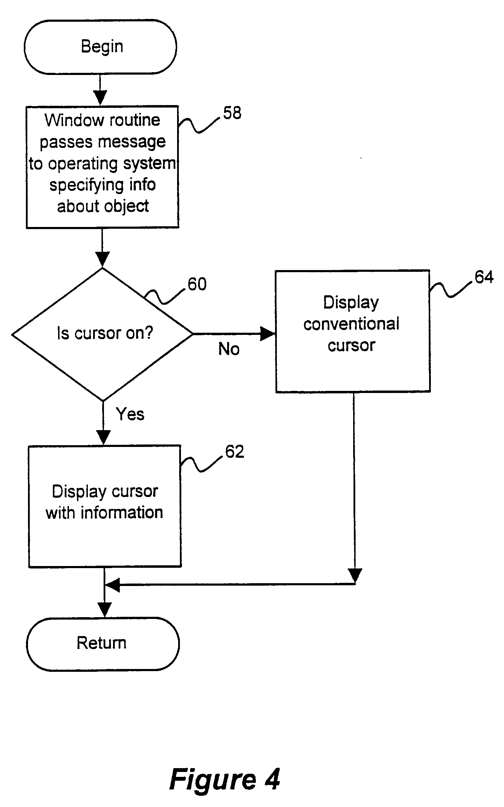

Figure 4 is a flow chart showing in more detail the steps that must be performed in order to realize step 56 of Figure 3 of outputting information about the object to which the pointing portion 28 points. After the window procedure has determined what is at the specified cursor position, the procedure passes a message to the operating system 22 (Figure 1) that tells the operating system what type of cursor to display and sets forth the contents and type of information to be output (step 58 in Figure 4). The information to be output may be textual data, other video data and/or even audio data. Suppose that the application program desires to display a name cursor 26 (Figure 2A). A message requesting that a name cursor be displayed is passed to the operating system 22 along with a text string for the name to be displayed in the name box 30. If audio data is output, the audio data is also passed to the operating system.

Whether the information cursor is displayed depends upon whether the information cursor is designated as "On" or "Off". The operating system checks whether the information cursor is "On" (step 60). In certain instances, the user may have the option of specifying whether the information cursor is "On" or "Off". Alternatively, the information cursors may be programmed by the application program or operating system 22 (Figure 1) such that they are automatically turned "On" when the conventional cursor points to a named entity. This latter option provides an automatic mechanism for switching "On" or "Off" the information cursor. The output of audio information may also be turned "On" or "Off" as may the output of video data. If the information cursor is not "On", a conventional cursor is displayed (step 64). As an example, consider the name cursor 26. If the name cursor 26 is "Off", the name box 30 is not displayed and no audio information is output (Figure 2A). Instead, a conventional cursor is displayed. On the other hand, if the name cursor is "On", the pointing portion 28 is displayed along with the appropriate name information to be used in the name box and/or appropriate audio output (step 62).

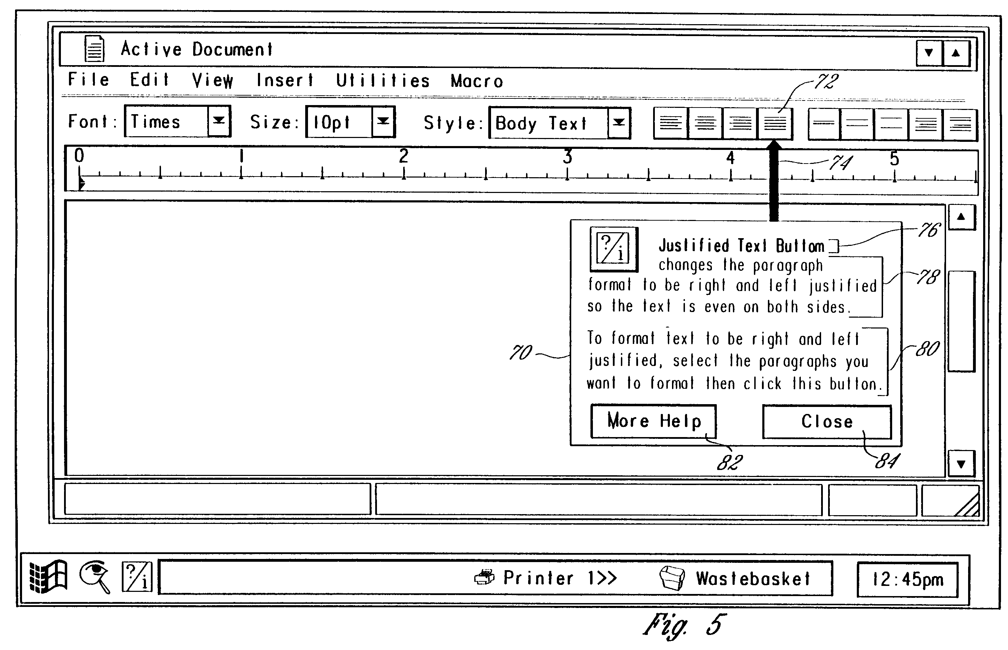

In addition to information cursors, the preferred embodiment of the present invention also provides Quick Info Windows. Figure 5 shows an example of a Quick Info Window 70 for a toolbar button 72. In the example shown in Figure 5, the toolbar button 72, is a Justified Text Button. Each Quick Info Window 70 provides context sensitive information about an object (in this case a toolbar button 72) that is pointed to by arrow 74. The information provided within the Quick Info Window 70 is provided by the object 72 to which the arrow 74 points. Each Quick Info Window 70 displays the object name 76. In the example shown in Figure 5, the object name is "Justified Text Button". The Quick Info Window 70 also provides a description of the object. In the example shown in Figure 5, the description of the object includes text 78 which specifies the purpose of the object and text 80 which specifies how to use the object.

The Quick Info Window 70 also includes two pushbuttons: a More Help pushbutton 82, and a Close pushbutton 84. The More Help pushbutton 82, when activated, provides additional help information for the object 72. The Close pushbutton 84, when activated, closes the Quick Info Window 70.

The operating system 22 (Figure 1) provides Quick Info Windows for a number of different types of objects that appear on the screen of the video display 20. These objects include menubars, context menus, toolbars, palettes, dialog box controls, property sheets, forms, files, folders, links and other window elements, such as Min/Max buttons.

Quick Info Windows 70 may be accessed in two complimentary ways: in riffing mode and not in riffing mode. Riffing mode is a mode wherein any time the user points with a cursor to an object that supports a Quick Info Window, the Quick Info Window for the object is generated. Riffing is explicitly turned "On" and "Off" by the user. When riffing mode is "Off", if the user wishes to generate a Quick Info Window, he must take additional steps other than positioning the cursor over an object.

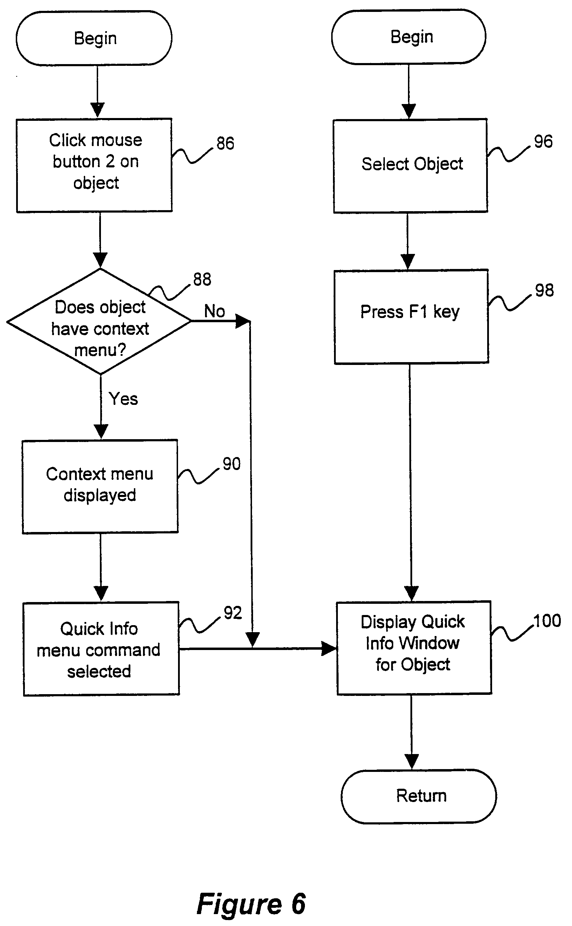

Figure 6 is a flow chart showing the steps that may be used to access a Quick Info Window 70 when not operating in riffing mode. A first option is for a user to position a cursor with the mouse 18 (Figure 1) over an object and to press button 2 (typically the right button) of the mouse (step 86 in Figure 6). A determination is then made whether the object has a context menu (step 88). If the object has a context menu, the context menu is displayed (step 90). The context menu includes a "Quick Info" menu command. The Quick Info menu command is then selected (step 92). As a result, the Quick Info Window for the object is displayed (step 100). On the other hand, if at step 88 it is determined that the object does not have a context menu, the Quick Info Window for the object is displayed without first producing a context menu (step 100).

Another option that may be used to access a Quick Info Window when not in riffing mode is to first select the object using the keyboard 16 or mouse 18 (step 96). The F1 key on the keyboard 16 then may be pressed. The F1 key is programmed by the operating system 22 to provide context-sensitive help information. After the F1 key is pressed, the Quick Info Window is displayed in proximity to the object (step 100).

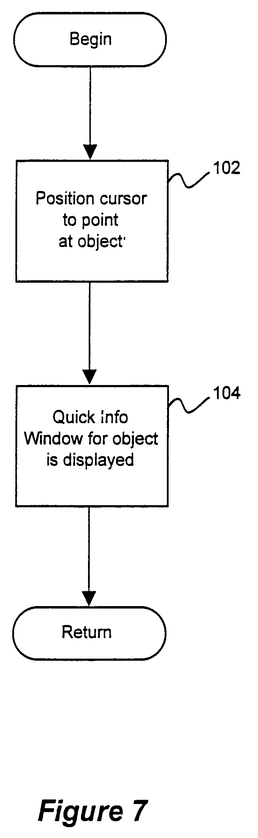

A Quick Info Window 70 may also be generated in riffing mode. The primary goal of riffing mode is to help less experienced or curious users to learn more about objects. Figure 7 is a flow chart illustrating the steps performed to access a Quick Info Window 70 when riffing mode is turned "On". In particular, the cursor is positioned to point at an object (step 102). When the cursor points to an object that supports a Quick Info Window, the Quick Info Window 70 is displayed for the object (step 104). When a user moves the cursor over an object other than the object for which a previous Quick Info Window was generated, the Quick Info Window is repositioned near the new object and the contents of the Quick Info Window are updated to reflect the information for the new object.

When operating in riffing mode, a user may select the More Help pushbutton 82 or the close pushbutton 84 by moving the cursor pointer near or along the arrow 74. This allows the user to move the pointing portion 28 of the cursor inside the Quick Info Window 70 without bringing up additional Quick Info Windows. Hence, a sort of "safety zone" is provided.

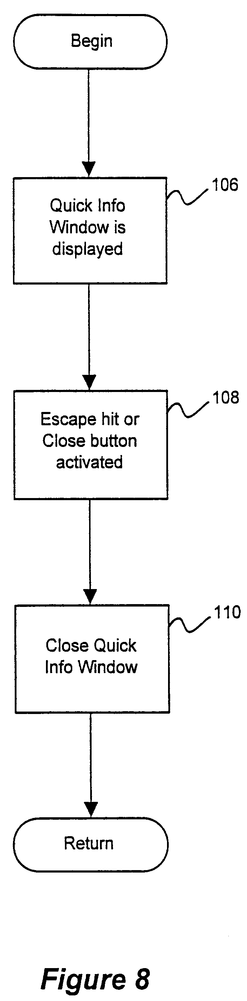

After a user has generated a Quick Info Window 70, he may wish to later close the Quick Info Window. Figure 8 is a flow chart of the steps performed to close a Quick Info Windows 70. Initially, a Quick Info Window 70 is displayed on the video display 30 (step 106). The user then hits the escape button on the keyboard 16 or, alternatively, hits the close pushbutton 84 (Figure 5) within the Quick Info Window 70 (step 108 in Figure 8). In response to these steps, the Quick Info Window is closed (step 110).

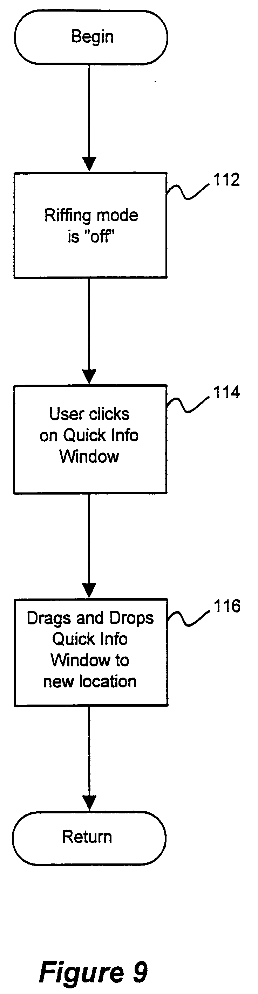

Quick Info Windows may be moved about the video display 20 (Figure 1) when not in riffing mode. However, when in riffing mode, the Quick Info Window 70 may not be moved. Figure 9 is a flow chart showing the steps that are performed to move a Quick Info Window. The riffing mode must be designated as "Off" (step 112). The user then positions the cursor using the mouse 18 (Figure 1) to point to a location in the Quick Info Window 70 and depresses a designated one of the mouse buttons (step 114). While keeping the button depressed, the user drags the mouse to reposition the Quick Info Window at a new location and drops the Quick Info Window at the new location (step 116). When the Quick Info Window 70 is dragged, the arrow 74 connecting it to the object 72 of interest is removed.

The size of a Quick Info Window depends upon the amount of text being displayed within the window. The width of the Quick Info Window is fixed, whereas the height of the Quick Info Window grows to display as much text as required. The window height is bounded by the size of the video display 20. The arrow 74 of the Quick Info Window 70 has a length based upon where the Quick Info Window 70 is positioned on the screen and the amount of space between the Quick Info Window 70 and the object 72 of interest.

It should be appreciated that more than one Quick Info Window 70 may be displayed on the video display 20 simultaneously. It should also be appreciated that the font size and type of textual information provided within the Quick Info Window 70 may be varied from the default font, which is MS San Serif 8.

While the present invention has been described with reference to a preferred embodiment thereof, those skilled in the art will appreciate that various changes and form of the detail may be made without departing from the scope of the present invention as defined by the appended claims.

## Claims

1. In a data processing system having a video display, an audio output device and an input device, a method, comprising the steps of:
displaying objects on the video display, said objects including a cursor;
in response to a user using the input device, positioning the cursor over at least a portion of a selected one of the objects that is displayed; and
in response to the cursor being positioned over at least a portion of the selected object, outputting audio information about the selected object on the audio output device and displaying information about the selected object as part of the cursor on the video display.

2. The method recited in claim 1 wherein the information displayed in the displaying information step is a name of the selected object.

3. The method recited in claim 1 wherein the step of outputting audio information about the selected object further comprises the step of outputting audio information corresponding to a name of the selected object.

4. The method recited in claim 1 wherein the input device is a mouse and the step of positioning the cursor over at least a portion of the selected object is performed in response to the user using the mouse.

5. The method recited in claim 1 wherein the input device is a keyboard and the step of positioning the cursor over at least a portion of the selected object is performed in response to the user using the keyboard.

6. In a data processing system having a video display, an audio output device and a mouse, a method comprising the steps of:
displaying a source object icon associated with a source object and a target object icon associated with a target object on the video display;
in response to a user using the mouse, positioning a cursor over at least a portion of the source object icon;
in response to the cursor being over at least a portion of the source object icon, outputting audio information on the audio output device about the source object;
in response to the user using the mouse, dragging the source object icon across the video display until the cursor is over at least a portion of the target object icon; and
in response to the cursor being positioned over at least a portion of the target object icon, outputting audio information on the audio output device about the target object.

7. The method recited in claim 6, further comprising the step of, in response to the user using the mouse, dropping the source object icon on the target object icon.

8. In a data processing system having a video display, a method comprising the steps of:
displaying objects on the video display;
positioning a cursor on the video display to be over at least a portion of one of the objects; and
in response to the cursor being positioned over at least a portion of one of the objects, displaying a window holding information about the object to which the cursor is over on the video display.

9. The method recited in claim 8 wherein the step of displaying the window holding information about the object which the cursor is over further comprises the step of displaying a pointer to the object from the window.

10. The method recited in claim 8 wherein the step of displaying the window holding information about the object which the cursor is over further comprises the step of providing a visual tool in the window which the user may use to obtain help information about the object.

11. The method recited in claim 8 wherein the step of displaying the window holding information about the object which the cursor is over further comprises the step of providing a visual tool in the window which the user may use to close the window.

12. The method of claim 8 wherein the information held in the window includes a name of the object to which the cursor is over.

13. The method of claim 8 wherein the information held in the window includes a description of the object to which the cursor is over.

14. The method recited in claim 8, further comprising the step of closing the window.

15. In a data processing system having a video display and an input device, a method comprising the steps of:
displaying an object on the video display;
in response to a user using the input device, displaying a context menu for the object on the video display, wherein said context menu includes an option for generating an information window; and
in response to the user selecting the option for generating the information window, displaying the information window holding information about the object on the video display.

16. The method recited in claim 15 wherein the step of displaying the information window holding information about the object on the video display further comprises the step of displaying a pointer to the object from the information window.

17. The method recited in claim 15 wherein the step of displaying the information window holding information about the object on the video display further comprises the step of providing a visual tool in the information window which the user may use to obtain help information about the object.

18. The method recited in claim 15 wherein the step of displaying the information window holding information about the object on the video display further comprises the step of providing a visual tool in the information window which the user may use to close the information window.

19. The method of claim 15 wherein the information held in the information window includes a name of the object.

20. The method of claim 15 wherein the information held in the information window includes a description of the object.

21. The method of claim 15, further comprising the step of closing the window.

22. In a data processing system having a video display and an input device, a method comprising the steps of:
displaying an object on the video display;
in response to a user using the input device, selecting the object; and
in response to the user using the input device, generating a window holding information about the selected object, said window including a pointer from the window to the selected object.

23. A data processing system comprising:
an input device;
a video display for display objects and windows; and
an information window generator for generating information windows holding information about associated objects, each information window including a visual pointer that points to its associated object.
